Europäisches Patentamt

European Patent Office

Office européen des brevets

(19)

(11) Numéro de publication: **0 141 697**
**A2**

(12) # DEMANDE DE BREVET EUROPEEN

(21) Numéro de dépôt: 84401775.6

(22) Date de dépôt: 07.09.84

(51) Int. Cl.⁴: **G 02 B 6/28**

(30) Priorité: 09.09.83 FR 8314378

(43) Date de publication de la demande: 15.05.85
Bulletin 85/20

(84) Etats contractants désignés: AT BE CH DE FR GB IT LI
LU NL SE

(71) Demandeur: SOCIETE D'OPTIQUE, PRECISION
ELECTRONIQUE ET MECANIQUE - SOPELEM, 102 rue
Chaptal, F-92300 Levallois-Perret (FR)

(72) Inventeur: Sellin, Rémy, 42 allée Louis Braille,
F-77400 Lagny-Sur-Marne (FR)
Inventeur: Baluteau, Jean-Michel, 77 allée de Chartres,
f-93190 Livry-Gargan (FR)
Inventeur: Fillol, Bernard, 126 bd. du Montparnasse,
F-75015 Paris (FR)
Inventeur: Moirez, Jacques, 4 avenue des Gobelins,
F-75005 Paris (FR)
Inventeur: Saint-Sevin, Michel, 1 bis rue des 3 Soeurs,
F-93220 Gagny (FR)

(74) Mandataire: Saint-Martin, René et al,
CREUSOT-LOIRE 15 rue Pasquier, F-75383 Paris
Cedex 08 (FR)

(54) **Dispositif de transmission de signaux lumineux entre des fibres optiques.**

(57) L'invention se rapporte à un dispositif permettant de transmettre des signaux lumineux entre des fibres optiques.

Il comprend deux optiques (3 et 4) qui couplent deux cables de fibres (1, 2) de fibres optiques et qui sont séparées l'une de l'autre de manière que le foyer image d'une optique soit sensiblement confondu avec le foyer objet de l'autre optique.

EP 0 141 697 A2

# Dispositif de transmission de signaux lumineux entre des fibres optiques

La présente invention se rapporte à un dispositif permettant de transmettre des signaux lumineux entre des fibres optiques.

On connaît des dispositifs permettant de coupler deux fibres optiques ou deux câbles de fibres optiques au moyen d'un système optique comportant des lentilles disposées entre la fibre émettrice et la fibre réceptrice ou entre le câble de fibres émettrices et le câble de fibres réceptrices-On connaît un dispositif de couplage de deux fibres entre elles qui comprend entre ces fibres, deux optiques convergentes qui sont centrées sur l'axe desdites fibres et sont séparées l'une de l'autre par un intervalle d'air tel que le foyer image d'une optique soit confondu avec le foyer objet de l'autre optique.

La présente invention a pour but de fournir un connecteur de deux câbles de fibres optiques s'affranchissant des aberrations de champ et permettant de coupler des fibres éloignées de l'axe optique. Ce connecteur minimise (annule théoriquement) les pertes de flux au couplage des deux câbles de fibres optiques.

Conformément à la présente invention, le dispositif couple des fibres optiques d'émission et de réception et comprend deux optiques convergentes séparées desdites fibres et séparées l'une de l'autre par un intervalle d'air tel que le foyer image d'une optique soit sensiblement confondu avec le foyer objet de l'autre optique et il est caractérisé par le fait que lesdites optiques couplent l'un à l'autre deux câbles contenant chacun une pluralité de fibres optiques.

Selon une caractéristique, les extrémités des fibres optiques d'un câble sont sensiblement contenues dans un plan focal de l'optique associée.

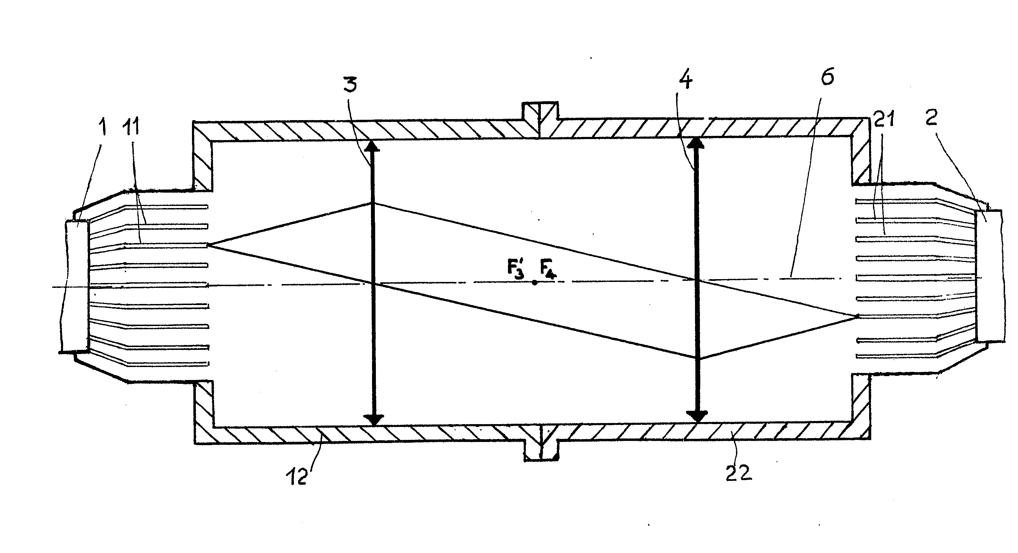

L'invention va maintenant être décrite avec plus de détails en se référant à un mode de réalisation donné à titre d'exemple et représenté par le dessin annexé.

La figure unique représente schématiquement un dispositif couplant deux câbles de fibres optiques.

Le dispositif couple deux câbles 1 et 2 comportant chacun une pluralité de fibres optiques 11 et 21 respectivement.

Les fibres des câbles 1 et 2 sont couplées par un système optique composé de deux optiques convergentes 3 et 4 centrées sur un axe optique 6. Chaque optique 3 ou 4 est montée dans une fiche 12 ou 22 respectivement, les deux fiches étant connectables de manière à constituer un connecteur. Les extrémités des fibres 11 et 21 sont opposées et situées de part et d'autre des objectifs 3 et 4, dans des plans perpendiculaires à l'axe optique 6. Les fibres 11 et 21 sont parallèles à l'axe optique et certaines sont éloignées de celui-ci. Leurs extrémités sont tenues par des pièces non représentées.

Chaque optique 3 ou 4 est constituée de préférence par au moins deux lentilles.

Les optiques 3 et 4 sont séparées par un intervalle d'air de manière que le foyer image d'une optique soit confondu avec le foyer objet de l'autre optique. Ainsi la distance entre les deux optiques 3 et 4 est égale à la somme des distances focales des optiques.

Les extrémités de chaque groupe de fibres 11 ou 21 d'un câble sont contenues dans un plan focal de l'optique associée la plus proche 3 ou 4 respectivement.

Chaque intervalle compris entre une optique 3 ou 4 et les extrémités des fibres, 11 ou 21 respectivement, d'un câble peut être un intervalle d'air.

En variante, les extrémités des fibres 11 ou 21 pourraient être collées sur un bloc de verre. Pour supprimer les pertes aux sorties et aux entrées des fibres qui ne sont pas des surfaces traitées, on pourrait avoir avantage à disposer deux blocs de verre réalisant chacun la jonction entre les extrémités des fibres d'un câble 1 ou 2 et l'optique associée 3 ou 4. Chaque bloc serait collé aux extrémités des fibres et à la face de l'optique.

Le fonctionnement du dispositif va maintenant être expliqué.

On considèrera que les fibres 11 du cable 1 sont émettrices et que les fibres 21 du câble 2 sont réceptrices.

Un faisceau lumineux issu d'une quelconque fibre émettrice 11 est collimaté par l'optique 3 puis repris par l'optique 4 qui le focalise sur une fibre réceptrice 21.

Le flux émis par un point lumineux de la surface de sortie d'une fibre émettrice 11 se situe dans un cône dont l'axe est normal à ladite surface de sortie. De la même façon une fibre de réception 21 ne transmet que les rayons arrivant dans un cône dont l'axe est normal à la surface d'entrée de cette fibre. Du fait que les foyers intermédiaires F'3 et F4 des optiques 3 et 4 sont confondus, tous les axes des cônes de lumière émis par les points de la surface de sortie de la fibre 11 arrivent perpendiculairement à la surface d'entrée de la fibre réceptrice 21. Autrement dit le système optique ainsi décrit constitue un système télécentrique tel que la pupille d'entrée et la pupille de sortie sont rejetées à l'infini, la pupille intermédiaire étant dans le plan focal commun des optiques 3 et 4.

Le couplage optimum est obtenu lorsque les extrémités des fibres optiques sont situées dans les plans focaux des optiques et que les foyers intermédiaires sont confondus. Si le positionnement des extrémités des fibres optiques par rapport aux plans focaux et si la coïncidence des foyers intermédiaires ne sont pas réalisés à quelques pourcents près, les pertes de couplage deviennent importantes et le couplage n'est plus admissible.

Il est bien entendu que l'on peut sans sortir du cadre de l'invention imaginer des variantes et des perfectionnements de détails et de même envisager l'emploi de moyens équivalents.

0141697

4

REVENDICATIONS

1. Dispositif de transmission de signaux lumineux entre des fibres optiques d'émission (11) et de réception (21), comprenant deux optiques convergentes (3) et (4) séparées desdites fibres et séparées l'une de l'autre par un intervalle d'air tel que le foyer image d'une optique soit sensiblement confondu avec le foyer objet de l'autre optique, caractérisé par le fait que lesdites optiques (3) et (4) couplent l'un à l'autre deux câbles (1, 2) contenant chacun une pluralité de fibres optiques.

2. Dispositif selon la revendication 1, caractérisé par le fait que les extrémités des fibres optiques d'un câble sont sensiblement contenues dans un plan focal de l'optique la plus proche.